# EUROPÄISCHE PATENTSCHRIFT

(11) **EP 2 301 320 B1**
(45) Veröffentlichungstag und Bekanntmachung des Hinweises auf die Patenterteilung: **23.09.2015**
(21) Anmeldenummer: 09171478.2
(22) Anmeldetag: 28.09.2009
(51) Int. Cl.: A01D 43/08, A01G 23/093

(54) **Hackeinrichtung und Verfahren geeignet zur Ernte von Feldholz**
Chopping device and method suitable for harvesting field wood
Dispositif de hachage et procédé approprié à la récolte d'isolées

(43) Veröffentlichungstag der Anmeldung: 30.03.2011
(73) Patentinhaber: KD Stahl- und Maschinenbau GmbH, 37339 Breitenworbis (DE)
(72) Erfinder: Hucke, Klaus, Dr., 01309, Dresden (DE); Beer, Rainer, Dr., 01307, Dresden (DE); Duwe, Michael, 37355, Bernterode-Schacht (DE)
(74) Vertreter: Kailuweit & Uhlemann Patentanwälte Partnerschaft mbB

(56) Entgegenhaltungen:
- WO-A1-2007/066161
- WO-A1-2009/103269
- DE-A1-102005 049 716
- DE-U1-202004 003 387

## Beschreibung

Die Erfindung bezieht sich auf ein eine Hackeinrichtung und ein Verfahren geeignet zur Ernte von Feldholz.

Für die Ernte von Energieholzplantagen werden vorwiegend hochproduktive Maschinen mit Zuführsystemen und Hacktrommeln eingesetzt, wie sie bei der Mais- oder Zuckerrohrernte üblich sind.

Dabei werden die dünnen, stehenden Pflanzen von Maschinen mit horizontalen Hacktrommeln durch eine übliche Schneideinrichtung abgetrennt, durch ein Walzensystem in die horizontale Lage gebracht und in die quer liegende Hacktrommel eingezogen. Dieses System gewährleistet eine vorverdichtete Matte und damit eine definierte Hackschnitzelqualität.

Bei hohem Mähgut, wie in Energieholzplantagen gegeben, werden die Stämme durch einen Bügel oder auch durch Schneckenwendeln zusätzlich in Fahrtrichtung vorgespannt, abgeschnitten und durch das Entspannen sowie die nachfolgenden Walzen in die horizontale Lage gebracht. Dieses System funktioniert jedoch bei stärkeren Stämmen nicht, da sie brechen oder entwurzelt werden und stören dann die Zuführung. Daher bleiben beim Einsatz dieser Maschinen in Energieholzplantagen oft Stämme als Verlust liegen. So wird in der DE 10 2005 049 716 A1 ein Mähhacker für Pflanzen vorgestellt, bei dem nach dem Abschneiden der Pflanzen diese durch Einzugsorgane in mindestens eine konische Häckselschnecke mit etwa horizontal ausgerichteter Achse zur Zerkleinerung geführt werden. Da hierzu die Pflanzen nach dem Abschneiden von ihrer vertikalen Lage in die horizontale Lage der Häckselschnecke gedreht werden müssen, ist dieses System für die Ernte höherer Feldholzbestände ungeeignet.

In der WO 2007/066161 A1 wird eine Ernte- und Hackmaschine vorgestellt, bei dem die zu erntenden Pflanzen ebenfalls mittels einer bodennah geführten Säge abgetrennt und anschließend durch obere und untere Einzugsschnecken in aufrechter Position einer Hackeinrichtung zugeführt werden. Durch das Hacken in aufrechter Position entfällt zwar das Drehen der zu erntenden Pflanzen in die Horizontale. Aufgrund des Hackmessers am unteren Ende der Schnecke ist der Stammdurchmesser auf 5 - 7 cm begrenzt und die Zuführwendeln streifen die dünnen Äste vom Stamm ab, sodass ein Hackgut mit hohem Überlängenanteil entsteht.

Die Aufgabenstellung der vorliegenden Erfindung besteht darin, eine Hackeinrichtung und ein Verfahren zur Ernte von Feldholz anzubieten, das eine sichere und schnelle Ernte auch höherer Feldholzbestände ermöglicht.

Diese Aufgabenstellung wird durch eine Hackeinrichtung gemäß Anspruch 1 und ein Verfahren gemäß Anspruch 14 gelöst. Vorteilhafte Ausgestaltungen sind in den rückbezogenen Unteransprüchen dargestellt.

Im Rahmen dieser Patentanmeldung werden die Begriffe vom und hinten bezogen auf die Fahrtrichtung der Hackeinrichtung verwendet.

Die Hackeinrichtung nach WO 2007/06616 weist eine bodennah geführte Sägeeinrichtung zum Abtrennen der zu erntenden Bäume auf, beispielsweise eine oder mehrere Kettensägen oder eine oder mehrere Kreissägen. In Fahrtrichtung hinter der Sägeeinrichtung sind mindestens zwei Einzugswalzen angeordnet, die die Baumstämme erfassen und einer dahinter angeordneten Hacktrommel zuführen. Weiterhin hat die Hackeinrichtung in Fahrtrichtung gesehen vom angeordnete obere Einzugshaspeln, die die zu erntenden Baumstämme erfassen und der Sägeeinrichtung und den Einzugswalzen zuführen. Die Hacktrommel ist bodennah befestigt.
Bei der erfindungsgemäßen Hackeinrichtung beträgt der zwischen der Schneidelinie der Hacktrommel und der Horizontalen gebildete Trommelwinkel zwischen 30° und 85°. Die Rotationsachse der Hacktrommel ist vertikal ausgerichtet, wodurch die Baumstämme nicht in die Horizontale gebracht werden müssen.

Unter Einzugshaspeln werden hier längliche Gebilde verstanden, die geeignet sind, die Baumstämme zu erfassen und zu führen. Bevorzugt sind dies Spiralen aus Rohr oder Rundmaterial, die an ihrer rotierbaren Achse befestigt sind. Diese sind bevorzugt keglig ausgeführt, wobei der Durchmesser in Fahrrichtung gesehen abnimmt. In den Spiralzwischenräumen werden dann die Bäume erfasst und durch die Rotationsbewegung in Richtung der Hacktrommel in den Stauraum geführt. Die oberen Einzugshaspeln sind an Auslegern befestigt und bevorzugt hinsichtlich ihrer Höhe und vertikaler Auslage einstellbar. In einer weiterhin bevorzugten Ausführungsform sind die Einzugshaspeln zueinander vertikal versetzt angeordnet, wodurch sich die Greifräume überdecken können ohne dass die Haspeln miteinander kollidieren.

In einer bevorzugten Ausführungsform sind die oberen Einzugshaspeln so ausgeführt und positioniert und/oder ihre Rotationsgeschwindigkeit ist derart angepasst, dass der Zuführwinkel (der Winkel zwischen dem Baumstamm beim Anschnitt und der Horizontalen) zwischen 70° und 80° liegt. Die Stauraumbegrenzung und das untere Führungsblech sind so angeordnet, dass ein Zuführwinkel zwischen 70° und 80° entsteht.

Somit werden die Baumstämme der Hacktrommel in vertikaler bzw. leicht geneigter Lage zugeführt, wodurch ein Umlegen der Bäume in eine horizontale Lage entfällt. Dadurch kann die Ernte schneller durchgeführt werden und die Zuführung ist durch den Wegfall des Umlegens zudem wesentlich sicherer.

Zwischen den oberen Einzugshaspeln ist ein Stauraum ausgebildet, der in Fahrtrichtung gesehen nach hinten durch eine Stauraumbegrenzung abgeschlossen ist. Der Stauraum begrenzt somit den Förderweg der oberen Einzugsraspeln und durch die Stauraumbegrenzung werden die Baumstämme in vertikaler Einzugsposition zusammengeführt und in dieser Position gehalten. Durch diesen Stauraum ziehen die Einzugswalzen eine vorverdichtete Matte ein und somit ist eine definierte Hackschnitzelqualität gewährleistet. Zudem können durch den Stauraum Bereiche mit dichterem Baumbestand gepuffert werden, ohne dass die Fahrtgeschwindigkeit angepasst werden muss. Die Stauraumbegrenzung ist im einfachsten Fall ein horizontal ausgerichtetes Rohr.

Bevorzugt liegt der aus Trommelwinkel und Zuführwinkel resultierende Hackwinkel zwischen 50° und 65°, sodass der Durchmesser der Hacktrommel klein gehalten werden kann und die Streuung der Hackschnitzellänge den Forderungen genügt.

In einer weiterhin bevorzugten Ausführungsform ist der Hacktrommel eine Auswurfeinheit nachgeordnet.

In einer weiteren bevorzugten Ausführungsform sind auf der Hacktrommel mehrere durchgehende Messerbalken mit demontierbaren Messern angeordnet. Durch die Demontierbarkeit der Messerbalken kann die Anzahl der Messer verändert werden, wodurch die Größe der Hackschnitzel beeinflusst wird. Weiterhin bevorzugt sind die Messerbalken von der Schneidelinie zurückgesetzt angeordnet, wobei die Messer derart über die Messerbalken überstehen, dass sie an die Schneidelinie heranreichen.

Zur weiteren Verbesserung der Zuführung weist die Hackeinrichtung bevorzugt zusätzlich untere Einzugshaspeln auf. Diese sind bevorzugt einstellbar ausgeführt, können aber auch fest mit der Hackeinrichtung verbunden sein.

In einer weiterhin bevorzugten Ausführungsform ist die Hackeinrichtung als modulare Einheit an einen Traktor koppelbar oder auf einem Anhängefahrgestell montierbar. Sie kann auch an einem selbstfahrenden Fahrzeug montiert sein.

Das Verfahren zur Ernte von Feldholz mit einer zuvor beschriebenen Hackeinrichtung ist **dadurch gekennzeichnet, dass** ein zu hackender Baumstamm während des Hackvorganges entlang der Schneidelinie der Hacktrommel geführt wird. Erreicht wird dies durch die axiale Geschwindigkeitskomponente der Einzugswalzen, die aus der schrägen Zuführung des Baumes in die Einzugswalzen resultiert. Dadurch wandert der zu hackende Baumstamm während des Hackvorganges die Schneidlinie der Hacktrommel entlang nach oben. Dies ist vorteilhaft, da somit der untere Bereich der Schneidelinie der Hacktrommel frei wird für den Anschnitt der nachkommenden Baumstämme.

Nachfolgend wird ein Ausführungsbeispiel der Erfindung anhand von drei Figuren erläutert, dabei zeigen:
- Figur 1: eine Seitenansicht der Hackeinrichtung,
- Figur 2: die Draufsicht der Hackeinrichtung und
- Figur 3: eine Prinzipskizze der Seitenansicht von Einzugswalzen und Hacktrommel.

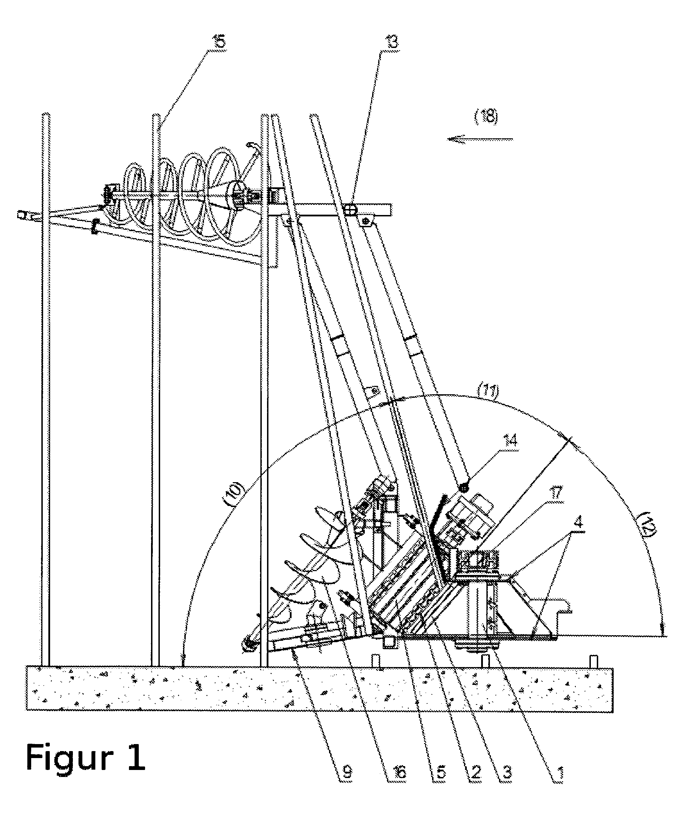

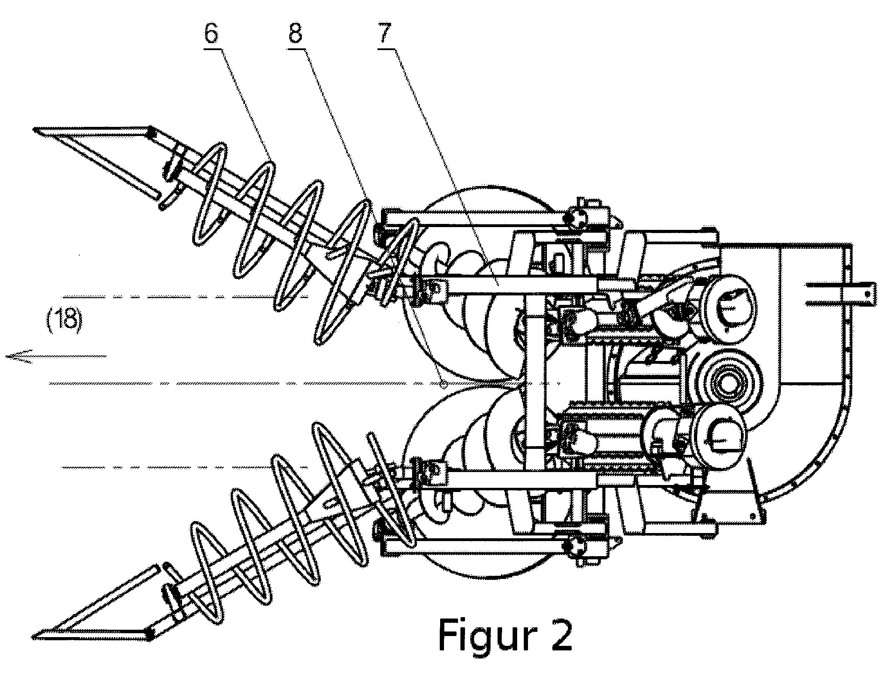

Figur 1 zeigt die Seitenansicht einer erfindungsgemäßen Hackeinrichtung, die sich in Fahrtrichtung 18 bewegt und Bäume 15 erntet. Figur 2 zeigt eine Draufsicht der gleichen Hackeinrichtung. Obenseitig hat die Hackeinrichtung in einer Höhe von ca. 4 Metern obere Einzugshaspeln 6, die auf einem oberen Haspelträger 7 angeordnet sind. Untenseitig hat die Hackeinrichtung den oberen Einzugshaspeln 6 in Fahrtrichtung 18 gesehen nachgeordnete untere Einzugshaspeln 16, zwischen denen eine Sägeeinrichtung 9 angeordnet ist. Die Sägeeinrichtung 9 ist hier als zwei nebeneinander angeordnete Kreissägen ausgeführt. Hinter den oberen Einzugshaspeln 6 ist ein Stauraum 8 angeordnet, der rückseitig durch eine Stauraumbegrenzung 13 begrenzt ist. Hinter den unteren Einzugshaspeln 16, deren horizontale und vertikale Position einstellbar ist, sind zwei Einzugs- und Presswalzen 5 angeordnet. Hinter den Einzugs- und Presswalzen hat die Hackeinrichtung eine Hacktrommel 1, deren Schneidelinie 3 parallel zu der Rotationsachse der Einzugs- und Presswalzen 5 ausgerichtet ist. Die Achse der Hacktrommel 17 ist dabei vertikal ausgerichtet, wodurch die Hacktrommel 1 nah am Boden positioniert werden kann. Die Hacktrommel hat obenseitig und untenseitig Endscheiben 4, zwischen denen vier demontierbare Messerbalken 3 angeordnet sind, auf denen jeweils ein oder zwei Messer 2 befestigt sind, die die Schneidelinie der Hacktrommel definieren. Durch die Variation der Anzahl der Messer kann die Größe der Hackschnitzel beeinflusst werden. Der Hacktrommel 1 ist eine in den Figuren nicht gezeigte Auswurfeinheit nachgeordnet.

Bei Fahrt der Hackeinrichtung in Fahrtrichtung 18 werden zu erntende Bäume 15 zuerst durch die oberen Einzugshaspeln 6 erfasst und zusammengeführt. Dabei werden sie von der Sägeeinrichtung 9 bodennah abgetrennt. Kurz vor dem Bereich der Sägeeinrichtung 9 werden die Bäume 15 durch die unteren Einzugshaspeln 16 erfasst und in Richtung von den nachgeordneten Einzugs- und Presswalzen 5 geführt. Gleichzeitig werden die Bäume 15 obenseitig durch die oberen Einzugshaspeln 6 in den nachgeordneten Stauraum 8 geführt, der rückseitig durch die Stauraumbegrenzung 13 begrenzt ist.

Die Einzugs- und Presswalzen 5 erfassen die Bäume 15 und führen sie der Hacktrommel 1 zu. Durch die aufgrund der Stauraumbegrenzung 13 zwangsläufig schräge Zuführung der Bäume 15 bewegen sich diese entlang der Achse der Einzugs- und Presswalzen 5 und damit auch entlang der Schneidelinie 2 der Hacktrommel 1 bis zum unteren Führungsblech 14. In dieser Bewegung der Bäume 15 entlang der Schneidelinie 2 der Hacktrommel 1 liegt ein wesentlicher technologischer Vorteil der Hackeinrichtung, da im unteren Bereich der Schneidelinie 2 Platz für nachfolgende Bäume 15 geschaffen wird und somit ein Blockieren der Einzugswalzen 5 verhindert wird. Die Bäume 15 werden der Hacktrommel 1 somit kontinuierlich zugeführt.

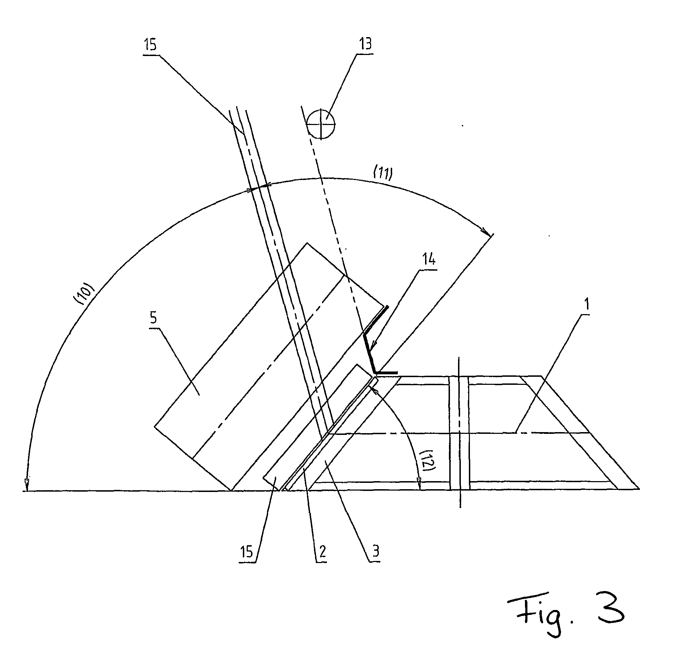

Figur 3 zeigt eine Prinzipskizze der Einzugs- und Presswalzen 5 und der Hacktrommel 1. Die Rotationsachse der Einzugswalzen 5 liegt dabei parallel zur Schneidelinie 2 der Hacktrommel 1. Die Achse 17 der Hacktrommel 1 ist vertikal angeordnet. Die Schneidelinie 2 bildet mit der Horizontalen den Trommelwinkel 12 von 50°. Der Zuführwinkel, der Winkel unter dem der Baum 15 der Hacktrommel 1 zugeführt wird, beträgt 75°. Aus dem Zuführwinkel 10 und dem Trommelwinkel 12 resultiert der Hackwinkel 11 von 55°. Bei Beginn des Hackvorganges befindet sich der Baum 15 am Anfang des Stauraumes 8 (siehe Figur 2) und wird während des Hackvorganges weiter in Richtung der Stauraumbegrenzung 13 bewegt. Untenseitig bewegt sich der Baumstamm während des Hackvorganges entlang der Schneidelinie 2 in Richtung des unteren Führungsbleches 14.

### Bezugszeichenliste

- 1: Hacktrommel
- 2: Messer/ Schneidelinie
- 3: Messerbalken
- 4: Endscheiben
- 5: Einzugs- und Presswalzen
- 6: Obere Einzugshaspeln
- 7: Haspelträger
- 8: Stauraum im Haspelträger
- 9: Kreissägeblatt
- 10: Zuführwinkel
- 11: Hackwinkel
- 12: Trommelwinkel
- 13: Stauraumanschlag
- 14: Unteres Führungsblech
- 15: Baumstamm
- 16: Untere Einzugshaspeln
- 17: Achse der Hacktrommel
- 18: Fahrtrichtung

## Patentansprüche

1. Hackeinrichtung, geeignet zur Ernte hoher Energieholzbestände, mit einer Hacktrommel (1), jeweils in Fahrtrichtung gesehen davor angeordneten mindestens zwei Einzugswalzen (5), einer bodennah geführten Sägeeinrichtung (9) und mindestens zwei oberen Einzugshaspeln (6), zwischen denen ein Stauraum (8) ausgebildet ist, in dem in Fahrtrichtung gesehen nach hinten der Förderweg der Einzugshaspeln (6) durch eine Stauraumbegrenzung (13) begrenzt ist, wobei die Rotationsachse der Hacktrommel (1) vertikal ausgerichtet ist und der durch die Schneidelinie (3) der Hacktrommel (1) mit der Horizontalen gebildete Trommelwinkel (12) zwischen 30° und 85° beträgt und die Schneidelinie (3) parallel zur Rotationsachse der Einzugswalzen (5) angeordnet ist.

2. Hackeinrichtung nach Anspruch 1, **dadurch gekennzeichnet, dass** die oberen Einzugshaspeln (6) so ausgeführt sind und/oder die Rotationsgeschwindigkeit der oberen Einzugshaspeln (6) derart angepasst ist, dass der Zuführwinkel (10) als Winkel zwischen dem Baumstamm beim Anschnitt und der Horizontalen zwischen 70° und 90° beträgt.

3. Hackeinrichtung nach einem der vorangehenden Ansprüche, **dadurch gekennzeichnet, dass** die Stauraumbegrenzung (13) einem unteren Führungsblech (14) in Fahrtrichtung (18) gesehen derart vorgelagert ist, dass sich ein Zuführwinkel (10) zwischen 70° und 90°ergibt.

4. Hackeinrichtung nach einem der vorangehenden Ansprüche, **dadurch gekennzeichnet, dass** der aus dem Trommelwinkel (12) und dem Zuführwinkel (10) resultierende Hackwinkel (11) zwischen 50° und 80° beträgt.

5. Hackeinrichtung nach einem der vorangehenden Ansprüche, **dadurch gekennzeichnet, dass** der Hacktrommel (1) eine Auswurfeinheit nachgeordnet ist.

6. Hackeinrichtung nach einem der vorangehenden Ansprüche, **dadurch gekennzeichnet, dass** auf der Hacktrommel (1) mehrere durchgehende Messerbalken (3) mit demontierbaren Messern (2) angeordnet sind, wobei die Messerbalken (3) von der Schneidelinie (2) zurückgesetzt sind und die Messer (2) um diesen Betrag überstehen.

7. Hackeinrichtung nach einem der vorangehenden Ansprüche, **dadurch gekennzeichnet, dass** mittels der Verstellbarkeit der Einzugshaspeln (6) in Höhe und vertikaler Auslage der Einzugswinkel (10) variierbar ist.

8. Hackeinrichtung nach einem der vorangehenden Ansprüche, **dadurch gekennzeichnet, dass** die Einzugshaspeln (6) keglig mit entgegen der Fahrtrichtung (18) zunehmendem Durchmesser ausgeführt sind.

9. Hackeinrichtung nach einem der vorangehenden Ansprüche, **dadurch gekennzeichnet, dass** die Einzugshaspeln (6) zueinander vertikal versetzt angeordnet sind.

10. Hackeinrichtung nach einem der vorangehenden Ansprüche, **dadurch gekennzeichnet, dass** die Hackeinrichtung als modulare Einheit an einen Traktor koppelbar ist oder auf einem Anhängefahrgestell montiert ist oder an einem selbstfahrenden Fahrzeug montiert ist.

11. Hackeinrichtung nach einem der vorangehenden Ansprüche, **dadurch gekennzeichnet, dass** an den Seiten der Sägeeinrichtung (9) untere Einzugshaspeln (16) angeordnet sind.

12. Hackeinrichtung nach einem der vorangehenden Ansprüche, **dadurch gekennzeichnet, dass** die Position und/oder Ausrichtung der unteren Einzugshaspeln (16) einstellbar sind.

13. Hackeinrichtung nach einem der vorangehenden Ansprüche, **dadurch gekennzeichnet, dass** die Sägeeinrichtung (9) mindestens eine Kreissäge oder eine Kettensäge ist.

14. Verfahren zur Ernte von Feldholz mit einer Hackeinrichtung nach einem der vorangehenden Ansprüche, **dadurch gekennzeichnet, dass** die zu hackenden Baumstämme (15) den Einzugswalzen (5) schräg zugeführt und während des Hackvorganges entlang der Schneidelinie (2) der Hacktrommel (1) nach oben bewegt werden.

15. Verfahren zur Ernte von Feldholz nach Anspruch 14, **dadurch gekennzeichnet, dass** die zu hackenden Baumstämme (15) bis zu einem unteren Führungsblech (14) bewegt, durch die Stauraumbegrenzung in vertikaler Einzugsposition gehalten und den Einzugswalzen als vorverdichtete Matte zugeführt werden, wobei die Einzugswalzen parallel zur Schneidelinie rotieren.

## Claims

1. A chopping device suitable for harvesting high fuel wood crops, comprising a chopping cylinder (1), at least two feed rollers (5) each disposed in front of said chopping cylinder as viewed in the direction of travel, a sawing device (9) guided near to the ground and at least two upper feeder reels (6) between which a storage space (8) is formed in which, as viewed in the direction of travel, the conveying path of the feeder reels (6) is limited to the rear by a storage space limit (13), the axis of rotation of the chopping cylinder (1) being aligned vertically, and the cylinder angle (12) formed by the cutting line (3) of the chopping cylinder (1) with the horizontal being between 30° and 85° and the cutting line (3) being arranged parallel to the axis of rotation of the feed rollers (5).

2. The chopping device according to Claim 1, **characterised in that** the upper feeder reels (6) are made and/or the rotation speed of the upper feeder reels (6) are adapted such that the delivery angle (10) as the angle between the tree trunk when being cut and the horizontal is between 70° and 90°.

3. The chopping device according to any of the preceding claims, **characterised in that** the storage space limit (13), as viewed in the direction of travel (18), is fitted upstream of a lower guide plate (14) such that a delivery angle (10) of between 70° and 90° is produced.

4. The chopping device according to any of the preceding claims, **characterised in that** the chopping angle (11) resulting from the cylinder angle (12) and the delivery angle (10) is between 50° and 80°.

5. The chopping device according to any of the preceding claims, **characterised in that** the chopping cylinder (1) is downstream of an ejection unit.

6. The chopping device according to any of the preceding claims, **characterised in that** a number of continuous cutter bars (3) with removable cutters (2) are disposed on the chopping cylinder (1), the cutter bars (3) being set back from the cutting line (2) and the cutters (2) protruding by this amount.

7. The chopping device according to any of the preceding claims, **characterised in that** the angle of entry (10) can be varied in height and vertical positioning by means of the adjustability of the feeder reels (6).

8. The chopping device according to any of the preceding claims, **characterised in that** the feeder reels (6) are made such that they taper with a diameter that increases towards the direction of travel (18).

9. The chopping device according to any of the preceding claims, **characterised in that** the feeder reels (6) are arranged offset vertically in relation to one another.

10. The chopping device according to any of the preceding claims, **characterised in that** the chopping device can be coupled to a tractor as a modular unit or is fitted on a trailer chassis or is fitted on a self-propelling vehicle.

11. The chopping device according to any of the preceding claims, **characterised in that** lower feeder reels (16) are disposed on the sides of the sawing device (9).

12. The chopping device according to any of the preceding claims, **characterised in that** the position and/or alignment of the lower feeder reels (16) can be adjusted.

13. The chopping device according to any of the preceding claims, **characterised in that** the sawing device (9) is at least a circular saw or a chain saw.

14. A method for harvesting field wood comprising a chopping device according to any of the preceding claims, **characterised in that** the tree trunks (15) to be chopped are delivered to the feed rollers (5) at an angle and are moved upwards along the cutting line (2) of the chopping cylinder (1) during the chopping process.

15. The method for harvesting field wood according to Claim 14, **characterised in that** the tree trunks (15) to be chopped are moved to a lower guide plate (14), are held in a vertical infeed position by the storage space limit and are delivered to the feed rollers as a precompressed mat, the feed rollers rotating parallel to the cutting line.

## Revendications

1. Dispositif de hachage, convenant pour la récolte de grands peuplements de bois à usage énergétique, avec un tambour de hachage (1), avec au moins deux cylindres de chargement (5) respectivement disposés en avant de ce tambour, considéré dans le sens de marche, avec un dispositif de sciage (9) dirigé à proximité du sol, et avec au moins deux enrouleurs de chargement supérieurs (6), entre lesquels est formé un espace d'accumulation (8) dans lequel le parcours de transport des enrouleurs de chargement (6) est délimité, vers l'arrière considéré dans le sens de marche, par une délimitation (13) d'espace d'accumulation, sachant que l'axe de rotation du tambour de hachage (1) est orienté à la verticale et que l'angle de tambour (12) formé par la ligne d'intersection (3) du tambour de hachage (1) avec l'horizontale est compris entre 30° et 85°, et que la ligne d'intersection (3) est disposée parallèlement à l'axe de rotation des cylindres de chargement (5).

2. Dispositif de hachage selon la revendication 1, **caractérisé en ce que** les enrouleurs de chargement supérieurs (6) sont réalisés de telle sorte, et/ou la vitesse de rotation des enrouleurs de chargement supérieurs (6) est adaptée de telle sorte, que l'angle d'alimentation (10), à savoir l'angle formé entre le tronc d'arbre lors de son entame et l'horizontale, est compris entre 70° et 90°.

3. Dispositif de hachage selon l'une des revendications précédentes, **caractérisé en ce que** la délimitation (13) d'espace d'accumulation est précédée, considéra dans le sens de marche (18), d'une tôle de guidage inférieure (14) de telle sorte qu'on obtient un angle d'alimentation (10) compris entre 70° et 90°.

4. Dispositif de hachage selon l'une des revendications précédentes, **caractérisé en ce que** l'angle de hachage (11), résultant de l'angle de tambour (12) et de l'angle d'alimentation (10), est compris entre 50° et 80°.

5. Dispositif de hachage selon l'une des revendications précédentes, **caractérisé en ce que** le tambour de hachage (1) est suivi d'une unité d'éjection.

6. Dispositif de hachage selon l'une des revendications précédentes, **caractérisé en ce que** plusieurs barres de coupe traversantes (3) dotées de lames démontables (2) sont disposées sur le tambour de hachage (1), sachant que les barres de coupe (3) sont en retrait par rapport à la ligne de coupe (2) et que les lames (2) dépassent du montant correspondant.

7. Dispositif de hachage selon l'une des revendications précédentes, **caractérisé en ce qu'**on peut faire varier l'angle de chargement (10) au moyen de la faculté de réglage des enrouleurs de chargement (6) en hauteur et en position verticale.

8. Dispositif de hachage selon l'une des revendications précédentes, **caractérisé en ce que** les enrouleurs de chargement (6) sont réalisés coniques avec un diamètre augmentant à l'encontre du sens de marche (18).

9. Dispositif de hachage selon l'une des revendications précédentes, **caractérisé en ce que** les enrouleurs de chargement (6) sont disposés en étant verticalement décalés les uns par rapport aux autres.

10. Dispositif de hachage selon l'une des revendications précédentes, **caractérisé en ce que** le dispositif de hachage, en tant qu'unité modulaire, peut être accouplé à un tracteur ou est monté sur un châssis de remorque ou est monté sur un véhicule automoteur.

11. Dispositif de hachage selon l'une des revendications précédentes, **caractérisé en ce que** des enrouleurs de chargement inférieurs (16) sont disposés sur les côtés du dispositif de sciage (9).

12. Dispositif de hachage selon l'une des revendications précédentes, **caractérisé en ce que** la position et/ou l'orientation des enrouleurs de chargement inférieurs (16) sont réglables.

13. Dispositif de hachage selon l'une des revendications précédentes, **caractérisé en ce que** le dispositif de sciage (9) est au moins une scie circulaire ou une scie à chaîne.

14. Procédé pour récolter du bois de plein champ avec un dispositif de hachage selon l'une des revendications précédentes, **caractérisé en ce que** les troncs d'arbres (15) à hacher sont apportés en oblique aux cylindres de chargement (5) et sont, pendant l'opération de hachage, déplacés vers le haut le long de la ligne de coupe (2) du tambour de hachage (1).

15. Procédé pour récolter du bois de plein champ selon la revendication 14, **caractérisé en ce que** les troncs d'arbres (15) à hacher sont déplacés jusqu'à une tôle de guidage inférieure (14), sont maintenus en position de chargement verticale par la délimitation d'espace d'accumulation et sont apportés aux cylindres de chargement sous la forme d'une natte pré-comprimée, sachant que les cylindres de chargement tournent parallèlement à la ligne de coupe.
